# EUROPÄISCHE PATENTSCHRIFT

(11) **EP 2 393 624 B1**
(45) Veröffentlichungstag und Bekanntmachung des Hinweises auf die Patenterteilung: **25.02.2015**
(21) Anmeldenummer: 10701093.6
(22) Anmeldetag: 18.01.2010
(51) Int. Cl.: B23K 9/32, H01R 13/187

(54) **STROMBUCHSE FÜR EIN SCHWEIßGERÄT**
CURRENT SOCKET FOR A WELDING DEVICE
PRISE DE COURANT FEMELLE POUR UN APPAREIL DE SOUDAGE

(30) Priorität: 06.02.2009 AT 2082009
(43) Veröffentlichungstag der Anmeldung: 14.12.2011
(73) Patentinhaber: Fronius International GmbH, 4643 Pettenbach (AT)
(72) Erfinder: MITTERMAIR, Micha, A-4643 Pettenbach (AT); BRUNMAYR, Wolfgang, A-4600 Wels (AT); GLANSECK, Stefan, A-4614 Marchtrenk (AT)
(74) Vertreter: Sonn & Partner Patentanwälte
(86) Internationale Anmeldenummer: PCT/AT2010/000014
(87) Internationale Veröffentlichungsnummer: WO 2010/088707

(56) Entgegenhaltungen:
- DE-U1- 8 304 593
- US-A- 4 810 213

## Beschreibung

Die Erfindung betrifft eine Strombuchse für ein Schweißgerät, insbesondere ein Elektroden- und/oder WIG-Schweißgerät, wobei die aus leitendend Material gebildeten Strombuchse eine Bohrung zur Aufnahme eines an einem Schlauchpaket befestigten Steckerelementes aufweist und in der Bohrung eine axiale Führungsnut angeordnet ist, die über eine Längsnut nach außen geführt ist, so dass ein am Steckerelement angeordneter Führungsdorn eingeschoben und verdreht werden kann.

Aus DE 76 41 025 U ist eine Steckverbindung, insbesondere für Schweißkabel, bekannt, welche aus einem Buchsen- und einem Steckerteil bestehen, die durch Verdrehen miteinander verbunden werden. Weiters sind sie durch Isoliermuffen geschützt. Zwischen der Isoliermuffe und dem zugehörigen Buchsen- oder Steckerteil ist eine ein Verdrehen verhindernde formschlüssige Verbindung vorgesehen. Die formschlüssige Verbindung ist durch eine in Längs- oder Steckrichtung verlaufende Nut- und Federverbindung gebildet.

Weiters ist aus DE 83 04 593 U eine einpolige elektrische Schweißkabelkupplung bekannt, deren Stecker- und Buchsenkörper koaxial angeordnet und durch Ineinanderschieben und Gegeneinanderdrehen durch Eingriff eines Haltestiftes des Steckerkörpers in eine steigende Ringnut des Buchsenkörpers verriegelbar sind. Zentrisch ist durch die Stecker- und Buchsenkörper eine Versorgungsleitung hindurchgeführt. Die Versorgungsleitung ist eine Schutzgas- oder Kühlmittelleitung, und in dem Buchsenkörper ist eine an der Stirnfläche des Steckerkörpers anliegende Ringdichtung angeordnet.

Nachteilig bei diesen bekannten Kupplungen gemäß DE 76 41 025 und DE 83 04 593 U ist, dass sich der Bajonettverschluss lockern kann und anschließend ein schlechter Kontakt entsteht, wodurch ein erhöhter Übergangswiderstand zur Erwärmung und im schlimmsten Fall zum Abbrennen der Steckverbindung führt. Dies geschieht deshalb, da auf einer Baustelle die Schweißer oftmals am Schlauchpaket ziehen, so dass sich der Bajonettverschluss lösen kann und der Stecker mit den Dorn nur mehr lose in der Öffnung steckt.

Aus der DE 43 25 289 A1 ist ein Schweißkabelanschluss bekannt, bei dem durch eine Buchse-Kontaktstift-Verbindung, die das Schweißkabel im Griff des Lichtbogenhandschweiß- und Schneidbrenners oder an der Maschinenseite des Lichtbogenautomatenschweiß- und Schneidbrenners drehbar und sicher anschließt. Die Drehbarkeit wird durch die Anordnung eines Federkorbes im Kontaktbereich der Buchse gewährleistet. Bei der Verbindung des Kontaktstiftes mit der Buchse wird der Kontaktbereich des Kontaktstiftes in den Federkorb geklemmt und mittels einer Klemmfeder, die in eine Ringnut am Kontaktstift einrastet, vor dem evtl. Herausziehen gesichert. Der an der Buchse angeordnete Anschlag begrenzt die Drehbarkeit des Schweißkabels im Zusammenspiel mit dem am Kontaktstift angeordneten Führungsstift und schützt dadurch die Steuerleitungen.

Aus der US 4,810,213 A ist es bekannt, eine Strombuchse mit einer umlaufenden Spiralfeder zu versehen, um den Übergangswiderstand gering zu halten.

Von der Firma BALSEAL Engineering ist ein Kontaktsystem, mit der Bezeichnung "BalContact", bekannt, bei dem zur besseren Kontaktierung und Stromübertragung in einer Öffnung der Strombuchse eine Nut mit einem darin eingesetzten Federelement angeordnet ist. Hierbei weist das Federelement einen geringeren Innendurchmesser auf als die Öffnung, so dass das Federelement aus der Nut hervorragt. Wird in die Öffnung ein Steckkontakt eingeschoben, der einen geringfügig kleineren Außendurchmesser als der Innendurchmesser der Öffnung aufweist, so werden die Spiralen des Federelementes verformt. Durch den Einsatz des Federelementes entstehen mehrere Kontaktpunkte für eine bessere Leitfähigkeit. Aufgrund des individuellen Durchbiegens jeder Spirale des Federelementes wird erreicht, dass damit in einfacher Form Kontakt- und Oberflächenschwankungen am Steckkontakt kompensiert werden.

Nachteilig ist hierbei, dass lediglich kreisförmige bzw. runde Federelemente angeboten werden und somit ein Einsatz bei nicht vollständig runden Öffnungen nicht möglich ist. Unterbricht man nämlich den kreisförmigen Aufbau, d.h. trennt man diesen auf, so verliert das Federelement seine Eigensteifigkeit und würde beim Einsatz in einer Nut aus dieser herausfallen.

Die Aufgabe der Erfindung liegt darin, eine Strombuchse zu schaffen, bei der eine sicher Kontaktierung auch bei nicht korrekt angestecktem Stecker gewährleistet wird.

Gelöst wird diese Aufgabe dadurch, dass in der Bohrung eine radiale Nut angeordnet und, vorzugsweise im Kreuzungsbereich der Nut und der Längsnut, ein Halteelement positioniert ist, und dass in der Nut ein zur Stromübertragung ausgebildetes Federelement, insbesondere eine Spiralfeder, angeordnet ist, welches Federelement aus der Nut herausragt und somit den Durchmesser der Bohrung verkleinert, wobei das Halteelement eine Anschlagfläche für die Enden des Federelementes des nur über einen Teil des gesamten Umfangs ausgebildeten Federelements bildet.

Vorteilhaft ist hierbei, dass durch den Einsatz eines Federelementes ein sicherer Sitz bzw. eine sichere Kontaktierung des Steckerelementes erreicht wird. Durch die hohen Ströme beim Schweißen kommt es oftmals vor, dass das Steckerelement nicht richtig in der Bohrung der Strombuchse positioniert wird, so dass ein erhöhter Übergangswiderstand entsteht und somit eine Überhitzung die Folge ist, wobei die Strombuchse und das Steckerelement abbrennen. Setzt man jedoch das Federelement ein, so bildet sich aufgrund z.B. der Windungen oder Spirallen der Feder am Zapfen des Steckerelementes eine Vielzahl von Kontaktpunkten aus, so dass immer ein sehr guter Stromübergang vorhanden ist und somit keine Überhitzung stattfinden kann. Ein weiterer Vorteil liegt auch drin, dass aufgrund des Einsatzes des Federelementes der Bajonettverschluss nicht verriegelt sein muss und trotzdem ein sicherer Stromübergang vorhanden ist. Damit wird erreicht, dass in jeder Lage ein sicherer Stromübergang gewährleistet ist. Auch kann damit verhindert werden, dass beim Lockern des Bajonettverschlusses durch Ziehen am Schlauchpaket ein schlechter Kontakt gebildet wird, wodurch es zu Überhitzungen und in Folge zum Abbrennen der Steckerverbindung kommen kann.

Weitere vorteilhafte Ausführungsformen und Weiterbildungen sind in den Unteransprüchen angegeben. Sich daraus ergebende Vorteile können der Beschreibung entnommen werden.

Die vorliegende Erfindung wird anhand der beigefügten, schematischen Zeichnungen näher erläutert.

Darin zeigen:
Fig. 1 eine schematische Darstellung einer Schweißmaschine bzw. eines Schweißgerätes;
Fig. 2 eine schematische Darstellung eines Ausführungsbeispiels einer Strombuchse mit einem Haltelement, von den Einzelteilen bis hin in den zusammengesteckten Zustand, in vereinfachter Darstellung;
Fig. 3 eine schematische Darstellung eines anderen Ausführungsbeispiels einer Strombuchse, mit einem Steg als Anschlagfläche, von den Einzelteilen bis hin in den zusammengesteckten Zustand, in vereinfachter Darstellung;
Fig. 4 eine schematische Darstellung eines weiteren Ausführungsbeispiels einer Strombuchse, mit Bohrungen für Anschlagelemente, von den Einzelteilen bis hin in den zusammengesteckten Zustand, in vereinfachter Darstellung;
Fig. 5 eine schematische Darstellung noch eines anderen Ausführungsbeispiels einer Strombuchse, mit Stiftbohrungen für Stifte, von den Einzelteilen bis hin in den zusammengesteckten Zustand, in vereinfachter Darstellung.

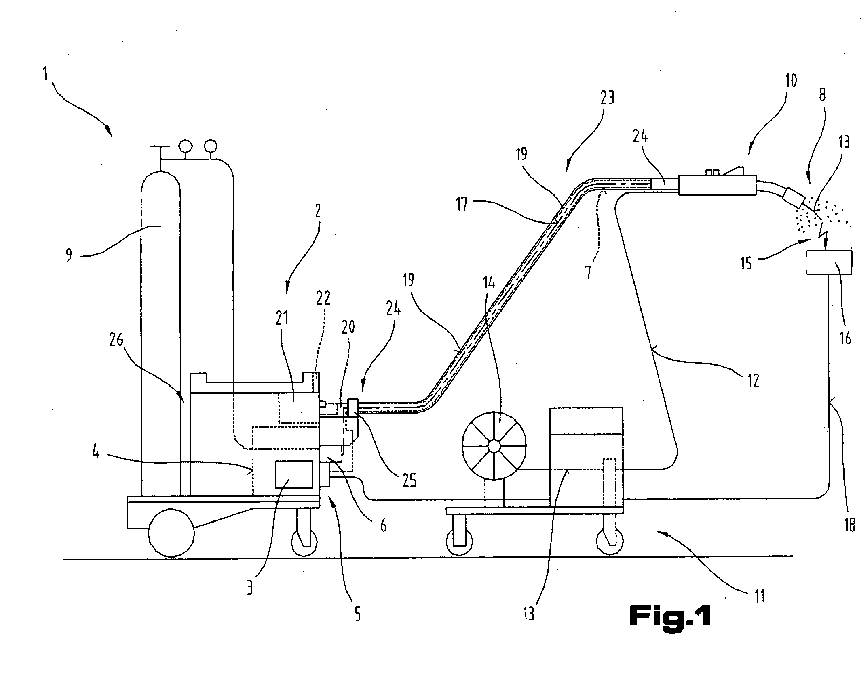

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dergl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode bzw. dem Schweißdraht, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. So ist es beispielsweise möglich, dass der Schweißbrenner 10 als luftgekühlter Schweißbrenner 10 ausgeführt werden kann.

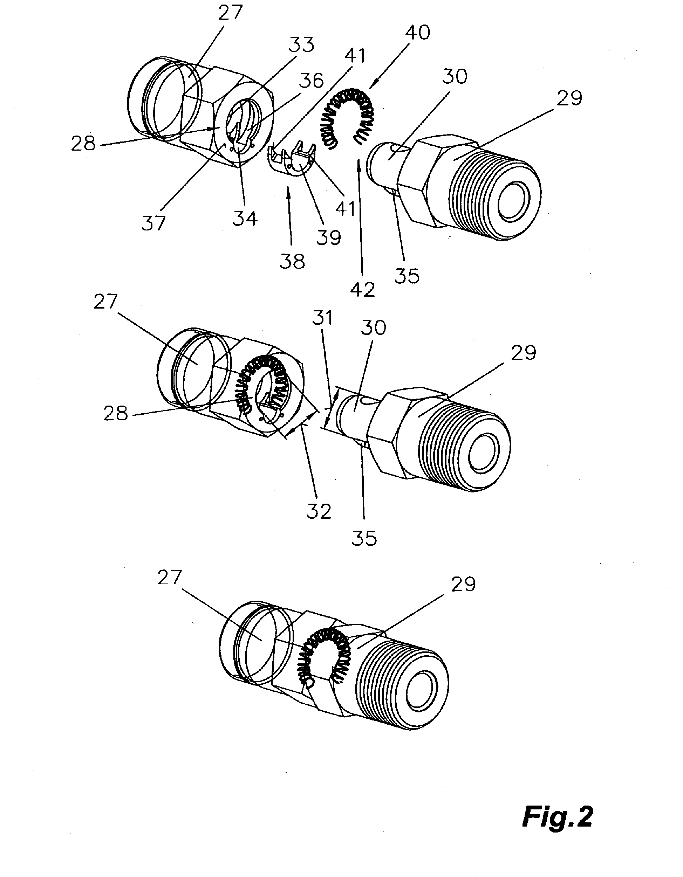

In Fig. 2 ist eine Detaillösung der Anschlussbuchsen bzw. Steckverbindungen, insbesondere eine Strombuchse 27, zum Anschluss der Leitung, insbesondere der Schweißleitungen 17, 18, für den Schweißbrenner 10 dargestellt und beschrieben.

Wesentlich bei der neuartigen Strombuchse 27 ist, dass ein sicherer Kontakt in der Strombuchse 27 gewährleistet ist, da für Schweißungen sehr hohe Ströme benötigt werden und somit ein sicherer Stromübergang geschaffen werden muss. Bevorzugt wird die Strombuchse 27 bei einem Elektroden- und/oder WIG-Schweißgerät eingesetzt.

Die Strombuchse 27 wird bevorzugt aus einem leitenden Material und einteilig ausgebildet. Dabei weist die Strombuchse eine Bohrung 28 zur Aufnahme eines an einem Schlauchpaket befestigten Steckerelementes 29 auf, wobei ein Zapfen 30 des Steckerelementes 29 einen geringfügig kleineren Außendurchmesser 31 als ein Innendurchmesser 32 der Bohrung 28 aufweist, so dass der Zapfen 30 in die Bohrung 28 einsteckbar ist.

In der Bohrung 28 ist eine axial verlaufende Führungsnut 33 angeordnet, die über eine Vertiefung, also eine Längsnut 34, nach außen geführt ist, so dass ein am Steckerelement 29, insbesondere am Zapfen 30 angeordneter Führungsdorn 35 entlang der Vertiefung bzw. Längsnut 34 eingeschoben und anschließend in die Führungsnut 33 zum Fixieren des Steckerelementes 29 verdreht werden kann. Bevorzugt verändert sich der Durchmesser der Führungsnut 33 kontinuierlich, so dass durch entsprechendes Verdrehen der Führungsdorn 35 in der Führungnut 33 verklemmt wird und somit eine Fixierung des Steckerelementes 29 erreicht wird.

Im Besonderen ist nun bei der Strombuchse 27 für ein Schweißgerät 1 vorgesehen, dass in der Bohrung 28 eine radiale Nut 36 angeordnet ist. Diese Nut 36 ist bevorzugt zwischen der Stirnseite 37 der Strombuchse 27 und der Führungsnut 33 für den Führungsdorn 35 angeordnet und kreuzt somit die Vertiefung bzw. Längsnut 34. Im Kreuzungsbereich der Nut 36 und der Längsnut 34 ist ein Halteelement 38 positioniert, wobei das Halteelement 38 derart ausgebildet ist, dass dieses eine Vertiefung 39 aufweist, so dass die Längsnut 34 bzw. Vertiefung nicht unterbrochen wird. Weiters ist in der Nut 36 ein Federelement 40, insbesondere eine Schrauben- bzw. Spiralfeder, angeordnet, wobei das Halteelement 38 eine Anschlagfläche 41 für die Enden 42 des Federelements 40 bildet. Das Federelement 40 ist zur Stromübertragung ausgebildet.

Damit nunmehr ein besserer Stromübergang geschaffen wird, ist die Nut 36 derart ausgebildet, dass das Federelement 40 aus der Nut 36 herausragt. Der Innendurchmesser 32 der Strombuchse 27, insbesondere der Bohrung 28, wird somit aufgrund der herausragenden Windungsteile des Federelementes 40 verkleinert. Führt man nunmehr das Steckerelement 29 mit dem Führungdorn 35 in die Strombuchse 27 ein, so werden die einzelnen Windungen des Federelementes 40 verformt, und sie bilden somit einen sicheren Stromübergang von der Strombuchse 27 zum Zapfen 30 des Steckerelementes 29. Durch die spezielle Ausbildung des Halteelementes 38 im Kreuzungsbereich ist es möglich, dass der Führungsdorn 35 am Zapfen 30 über die Längsnut 34 und das Halteelement 38 hindurchgeführt werden kann und anschließend durch Verdrehen der Führungsdorn 35 in der Führungsnut 33 fixiert werden kann.

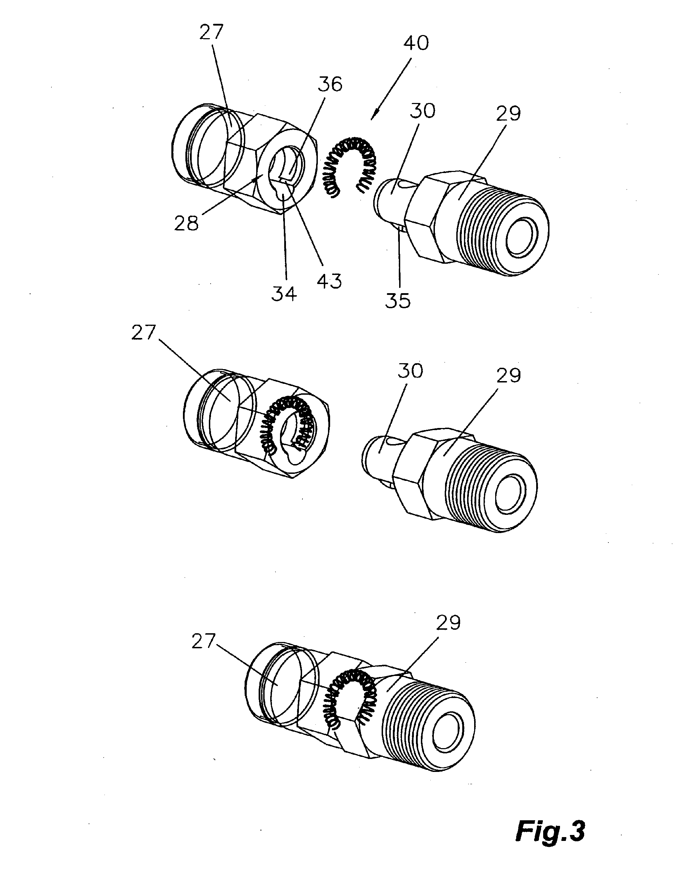

Weiters ist es möglich, wie in Fig. 3 ersichtlich, dass eine Ausbildung der Strombuchse 27 geschaffen wird, bei der das in Fig. 2 beschriebene und eingelegte bzw. eingebaute Halteelement 38 nicht mehr verwendet wird. Hierbei ist die Nut 36 für das Federelement 40 nicht über den gesamten Umfang ausgebildet, sondern es wird zwischen der Längsnut 34 und der Nut 36 ein Steg 43 gebildet, so dass das Federelement 40 am Steg 43 abgestützt wird und somit wiederum ein sicherer Halt des Federelementes 40 in der Bohrung 28 der Strombuchse 27 gegeben ist.

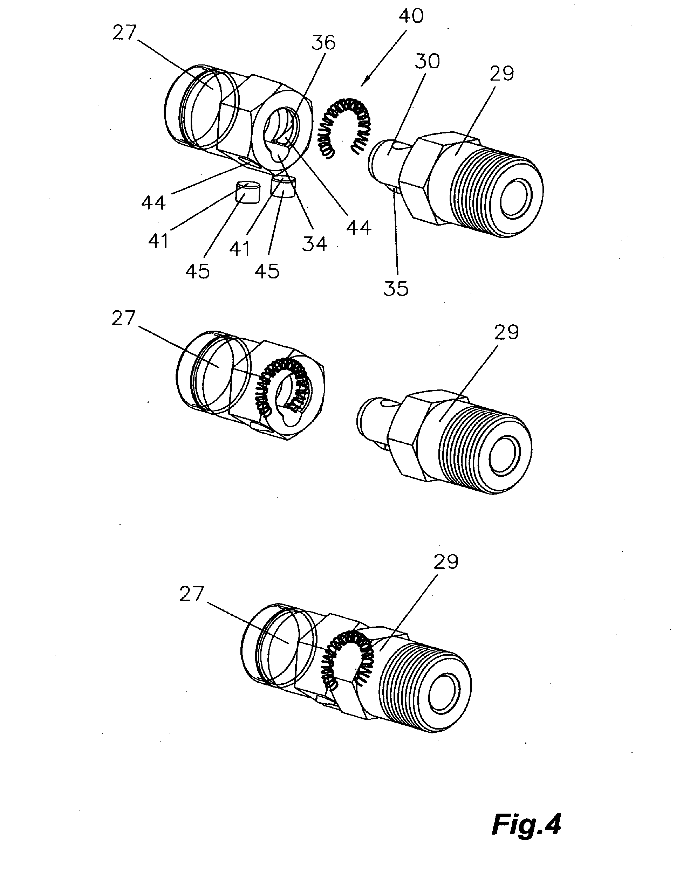

Ein sicherer Halt des Federelementes 40 in der Bohrung 28 der Strombuchse 27 wird auch beim weiteren Ausführungsbeispiel gemäß Fig. 4 erzielt. Hierbei weist die Strombuchse 27 zwei Bohrungen 44 auf, die sich in die Nut 36 für das Federelement 40 erstrecken. Durch Einsetzen von Anschlagelementen 45 in die Bohrungen 44 wird erreicht, dass in der Nut 36 für die Federelemente 40 wiederum eine Anschlagfläche 41 für das Federelement 40 geschaffen wird, so dass das Federelement 40 in der Nut 36 gehalten wird. Hierbei ist es möglich, dass die Bohrung 44 mit einem Gewinde versehen ist, so dass die Anschlagelemente 45 einfach von außen in die Bohrung 44 eingeschraubt werden können.

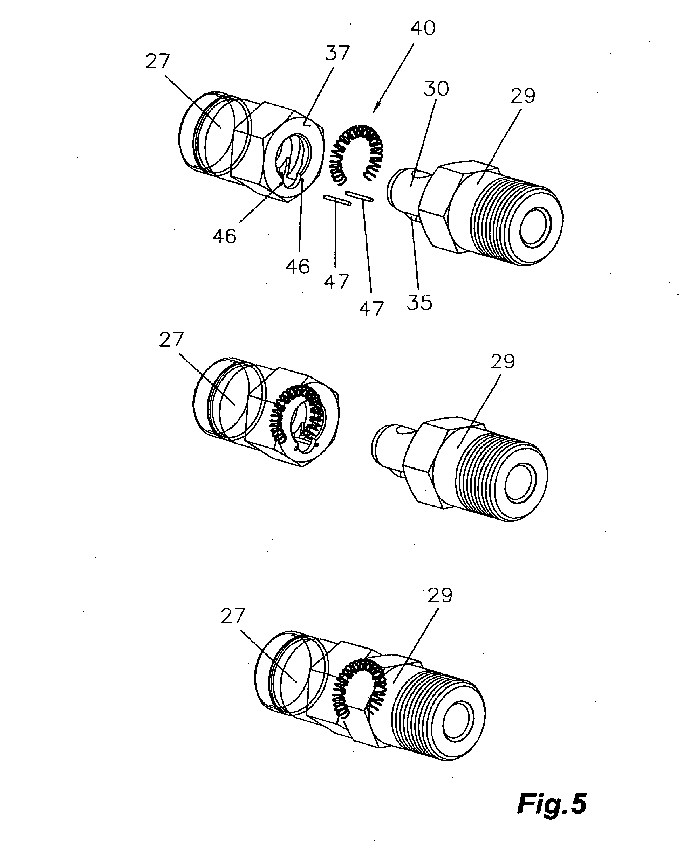

Beim Ausführungsbeispiel nach Fig. 5 wird ebenfalls ein sicherer Halt des Federelementes 40 erreicht, wobei hierzu parallel zur Längsnut 34 an jeder Seite von der Stirnflache 37 der Strombuchse 27 ausgehende Stiftbohrungen 46 vorgesehen sind, in die dann jeweils ein Stift 47 eingesteckt wird. Diese Stiftbohrungen 46 bzw. die Stifte 47 kreuzen dabei die Nut 36 für das Federelement 40, so dass durch Einstecken der Stifte 47 eine Anschlagfläche 41 für das Federelement 40 geschaffen wird.

## Patentansprüche

1. Strombuchse (27) für ein Schweißgerät (1), insbesondere ein Elektroden und/oder WIG-Schweißgerät, wobei die aus leitendem Material gebildete Strombuchse (27) eine Bohrung (28) zur Aufnahme eines an einem Schlauchpaket befestigten Steckerelementes (29) aufweist und in der Bohrung (28) eine axiale Führungsnut (33) angeordnet ist, die über eine Längsnut (34) nach außen geführt ist, so dass ein am Steckerelement (29) angeordneter Führungsdorn (35) eingeschoben und verdreht werden kann, **dadurch gekennzeichnet, dass** in der Bohrung (28) eine radiale Nut (36) angeordnet und, vorzugsweise im Kreuzungsbereich der Nut (36) und der Längsnut (34), ein Halteelement (38; 43; 45; 47) positioniert ist, und dass in der Nut (36) ein zur Stromübertragung ausgebildetes Federelement (40), insbesondere eine Spiralfeder, angeordnet ist, welches Federelement (40) aus der Nut (36) herausragt und somit den Durchmesser der Bohrung (28) verkleinert, wobei das Halteelement (38; 43; 45; 47) eine Anschlagfläche (41) für die Enden des nur über einen Teil des gesamten Umfangs ausgebildeten Federelementes (40) bildet.

2. Strombuchse (27) nach Anspruch 1, **dadurch gekennzeichnet, dass** das Halteelement (38) durch einen zwischen der Längsnut (34) und der Nut (36) angeorndeten Steg (43) gebildet ist, welcher einstückig aus dem Material der Strombuchse (27) hergestellt ist.

3. Strombuchse (27) nach Anspruch 1 oder 2, **dadurch gekennzeichnet, dass** sich in die Nut (36) für das Federelement (40) zwei Bohrungen (44) erstrecken, wobei in die Bohrungen (44) Anschlagelemente (45) zur Schaffung der Anschlagfläche (41) für das Federelement (40) einsteckbar sind.

4. Strombuchse (27) nach einem der vorhergehenden Ansprüche, **dadurch gekennzeichnet, dass** parallel zur Längsnut (34) an jeder Seite von der Stirnflache der Strombuchse (27) ausgehende Stiftbohrungen (46) vorgesehen sind, in die jeweils ein Stift (47) eingesteckbar ist.

## Claims

1. A power jack (27) for a welding device (1), in particular an electrode and/or TIG welding device, wherein the power jack (27), which is made of conductive material, includes a bore (28) for receiving a plug element (29) attached to a hose pack, and an axial guide groove (33) is disposed in the bore (28), said guide groove (33) being guided towards outside via a longitudinal groove (34) such that a guide pin (35) disposed on the plug element (29) can be inserted and rotated, **characterized in that**, in the bore (28), a radial groove (36) is disposed and a retaining element (38; 43; 45; 47) is positioned, preferably in the intersecting region of the groove (36) and the longitudinal groove (34), and that a spring element (40) designed to transmit power, in particular a spiral spring, is disposed in the groove (36), said spring element (40) protruding from the groove (36) and thereby reducing the diameter of the bore (28), wherein the retaining element (38; 43; 45; 47) forms a stop surface (41) for the ends of the spring element (40) formed over only a part of the entire periphery.

2. A power jack (27) according to claim 1, **characterized in that** the retaining element (38) is formed by a web (43) disposed between the longitudinal groove (34) and the groove (36) and formed in one piece of the material of the power jack (27).

3. A power jack (27) according to claim 1 or 2, **characterized in that** two bores (44) extend in the groove (36) for the spring element (40), stop elements (45) being insertable into the bores (44) for providing the stop surface (41) for the spring element (40).

4. A power jack (27) according to any one of the preceding claims, **characterized in that** pin bores (46) departing from the end face of the power jack (27) are provided in parallel with the longitudinal groove (34) on each side, into which a pin (47) can each be inserted.

## Revendications

1. Prise d'alimentation (27) pour un appareil de soudure (1), plus particulièrement un appareil de soudure à électrodes et/ou WIG, cette prise d'alimentation (27) constituée de matériau conducteur présentant un alésage (28) pour le logement d'un élément de connecteur (29) fixé à un ensemble de tuyaux et dans l'alésage (28), se trouve une rainure de guidage axial (33), qui est guidée par une rainure longitudinale (34) vers l'extérieur, de façon à ce qu'un mandrin de guidage (35) disposé au niveau de l'élément connecteur (29) puisse être inséré et tourné, **caractérisée en ce que**, dans l'alésage (28) se trouve une rainure radiale (36), de préférence dans la zone de croisement de la rainure (36) et de la rainure longitudinale (34), se trouve un élément de maintien (38 ; 43 ; 45 ; 47) et **en ce que** dans la rainure (36) se trouve un élément ressort (40) conçu pour la transmission du courant, plus particulièrement un ressort spiralé, cet élément à ressort (40) dépassant de la rainure (36) et donc réduisant le diamètre de l'alésage (28), l'élément de maintien (38 ; 43 ; 45 ; 47) formant une surface de butée (41) pour les extrémités de l'élément ressort (40) formé seulement sur une partie de la circonférence.

2. Prise d'alimentation (27) selon la revendication 1, **caractérisée en ce que** l'élément de maintien (38) est formé d'une nervure (43) disposée entre la rainure longitudinale (34) et la rainure (36), qui est réalisée d'une seule pièce dans le matériau de la prise d'alimentation (27).

3. Prise d'alimentation (27) selon la revendication 1 ou 2, **caractérisée en ce que**, dans la rainure (36) pour l'élément à ressort (40), s'étendent deux alésages (44), des éléments de butée (45) pouvant être insérés dans les alésages (44) pour la réalisation de la surface de butée (41) pour l'élément à ressort (40).

4. Prise d'alimentation (27) selon l'une des revendications précédentes, **caractérisée en ce que**, parallèlement à la rainure longitudinale (34), de chaque côté se trouvent des alésages pour goupilles (46) sortant de la surface frontale de la prise d'alimentation (27), dans lesquels une goupille (47) peut être insérée.
